# EUROPEAN PATENT SPECIFICATION

(11) **EP 0 717 595 B1**
(45) Date of publication and mention of the grant of the patent: **11.11.1998**
(21) Application number: 94926912.0
(22) Date of filing: 31.08.1994
(51) Int. Cl.: A21D 13/08

(54) **FILLED LAMINATED DOUGH SYSTEMS**
GEFÜLLTEN LAMINIERTEN TEIGPRODUKTEN
SYSTEMES DE PATE FEUILLETEE ET FOURREE

(30) Priority: 06.09.1993 EP 93202590
(43) Date of publication of application: 26.06.1996
(73) Proprietor: UNILEVER N.V., 3013 AL Rotterdam (NL); UNILEVER PLC, London EC4P 4BQ (GB)
(72) Inventor: BOODE-BOISSEVAIN, Karin, NL-4206 AE Gorichem (NL); SCHREURS, Rudolf Richardus A., NL-2134 JK Hoofddorp (NL)
(74) Representative: Sikken, Antonius H. J. M.
(86) International application number: EP9402892
(87) International publication number: WO9507025

(56) References cited:
- EP-A- 0 251 375
- EP-A- 0 383 134
- EP-A- 0 509 566
- WO-A-91/14371
- FR-A- 2 568 099
- US-A- 3 388 997
- US-A- 4 283 424

## Description

Laminated dough systems are often used in combination with a filling material. As filling materials, such as gellified fruit and juice, pastry fillings, pie fillings, ragout, hash, meat, sausage, etc. are often moist, a problem arises. The moisture present in the filling material migrates to the outerlayers of the laminate thereby reducing the crispness and the volume of the product after baking of the laminated dough.

In our Australian patent application 11482/92 we have encountered the above problem. An improvement in the laminated dough system was obtained by providing a laminated dough system with an anchoring layer of pastry, that in its turn is provided with a moisture barrier layer, in particular in the form of an acetofat. Although the above solution works reasonably well on products, wherein the filling material is contacted with a pre-baked product, problems with crispness of the baked laminate still exist, when the filling is brought on or in the unbaked laminated dough system, whereupon the filled product is baked. Even greater problems exist when the baked filled product is frozen and the frozen baked product is treated by microwaves. The products so obtained were soggy without any crispness.

In our European patent application 251375 we have disclosed whole meal puff pastries, wherein at least the fat layers of the laminated dough system contain a vegetable fibre material, in particular the bran obtained from the whole flour used in the dough preparation for the laminated system. Nothing is disclosed about the presence of a moist filling and the microwaveability of the filled products.

From WO 91/14371 pastry doughs are known, comprising a first phase, comprising:
20 - 45 wt% shortening
55 - 80 wt% ungelatinized starch
0.8 - 5 wt% polyol
and a second phase comprising:
20 - 80 wt% flour, with a protein-content of 3 - 14 wt%
10 - 30 wt% water
0.5 - 2 wt% salt
10 - 30 wt% oil or shortening
wherein the pastry dough comprises:
10 - 35 wt% of the first phase and
65 - 90 wt% of the second phase

Above product therefore requires the presence of a polyol, while it is disclosed that the improvements obtained concern the stability of the dough (refrigerated or frozen), increased flakiness, workability at cold temperatures and fast thaw times.

Nothing is disclosed about a moisture problem and the microwavability of filled laminated dough systems. In the systems we found a polyol is not present, while this component is essential for the solution presented in above WO-document.

From 90/09105 are known Bakery products comprising at least one dough part and at least one garnishing or filling are manufactured by a process in which the dough part is separated from the garnishing or filling by a collagen film which prevents liquid in the garnishing or filling from penetrating the dough part.

We now have studied the problem of how to come to laminated dough systems that, when provided with a moist filling, display excellent properties during microwaving, in particular when the products are frozen and are microwaved without thawing. The above study has resulted in our invention. Therefore, our invention concerns in the first instance a laminated dough system, comprising alternating layers of dough and laminated fat, wherein at least one of the laminated fat layers contains a waterbinding agent, while simultaneously at least one of the outer layers of the system is provided with a moisture barrier layer.

The amount of waterbinding agent in the laminated fatlayer(s) containing them ranges from 20:1 to 1:3 (i.e.: ratio fat : water-bindings agent) preferably from 3:1 to 1:2. Waterbinding agents are all compounds known for their waterbinding capability. Of course, only food grade (edible) waterbinders can be used. Suitable examples of waterbinders are: flour, in particular flour with a water content of 1-20 wt%, starch (natural, damaged, non-damaged, chemically modified or enzymically modified), gelatin, carbohydrates, pectin, natural gums, or vegetable fibres. Preferred flours are flours with a watercontent of 4-15 wt%. It is emphasized that flours with a watercontent of 1-10 wt% are obtained by predrying of natural flours (containing 10-20% water).

The dough in our laminated systems can be leavened, preferably by incorporation of yeast and performance of a fermentation, although also a chemical leavening agent can be used, or can be unleavened, as in puff pastries.

The lamination is performed in such a way that 8-729 fat layers are obtained in the laminated system. The exact number of fat layers, however, is dependent of the product that is made. Conveniently, the laminated dough system comprises 12-127 fat layers.

The moisture barrier layer that is provided to at least one of the outerlayers of the system can comprise at least one of the following layers: a pizza layer, a bread layer, a cookie layer, a cake pastry layer, and in particular a short crust layer, a fat layer, wherein a waterbinder is present and/or an oil layer, wherein a waterbinder is present. Waterbinders, present in the fat and/or oil containing moisture barrier layer are selected from: flour, bran, other vegetable fibres, starch, gelatin, pectin, natural gums, carbohydrate. The weight-ratio fat: waterbinder used in these barrier-layers suitably ranges from (90:10) to (20:80), preferably from (70:30) to (40:60).

Systems that combine the improved microwaveability with good mouthfeel are obtained, when the moisture barrier layer is a short crust layer, while the ratio of the thickness of all the laminated layers: the thickness of the short crust layer ranges from 6:1 to 1:1.

As stated above, our main aim is laminated dough systems that contain a moist filling material. Therefore, part of the invention is also a laminated, filled dough system, wherein the moist filling material is in contact with a moisture barrier layer.

A further improvement is achieved when the moist filling material is separated from the rest of the laminated dough system by an edible barrier layer, in particular being collagen. Although we have a preference for collagen also other materials such as bees wax, parraffin wax, zein (= protein), soy protein (e.g. as isolates) or chocolate can be applied as the barrier layer.

Part of the invention are also the baked, preferably filled laminated products, wherein the laminated dough systems are baked and optionally frozen.

The improvement obtained by the invention is achieved, both in the freshly baked product and in the frozen, baked product. In the frozen product a substantial improvement in microwaveability is achieved.

Examples of products that can be made according to the invention are apple-turnovers, sausage rolls, puff-pastry-snacks. However, other fillings, such as mexican, mushroom or vegetable-fillings can also be applied.

The process for the preparation of our baked, filled laminated products comprises the following steps:
(1) preparation of a dough by mixing and kneading of at least flour, water and fat
(2) preparation of a fat system, containing a waterbinder by mixing fat and waterbinder
(3) laminating the dough of (1) with the fat system of (2) providing a laminated dough system with 8-729 fat layers
(4) preparation of a moisture barrier layer in the form of a short crust layer, or in the form of a mixture of fat and/or oil and waterbinder
(5) providing at least one outerlayer of the product, obtained after (3) with the moisture barrier layer obtained after (4)
(6) providing a moist filling material in contact with the moisture barrier layer of the product, obtained after (5)
(7) baking of the product of (6) and optionally
(8) freezing of the product of (7)

The best results are obtained when the product of step (7) is subjected to a drying at a temperature above 80°C during 5 mins to 2 hrs prior to its freezing.

### EXAMPLES

1. Preparation of a laminated dough (puff-pastry)
1.1 Laminate dough

| Recipe: | |
|---|---|
| Zeeuwse flour | 800 g |
| water | 400 |
| margarine (Triokorst®) | 200 |
| salt | 16 |

The components are mixed in an Eberhardt mixer for 2 min at low speed, followed by 2 min at high speed. The dough is rested for 10 min.
1.2 The laminate fat was made by mixing 700 g Triokorst® with 300 g Zeeuwse flour.
1.3 A short crust dough was made by mixing in a Diosna of 500 g Banket-extra® flour; 260 g Biskien soft® margarine, 115 g water and 5 g salt.
1.4 Moist filling

| Recipe: | |
|---|---|
| minced beefmeat | 1000 g |
| milk | 100 |
| egg | 100 |
| bread crumps | 100 |
| salt | 5 |
| pepper | 4 |

1.5 Filled puffed pastry
The laminate dough was rolled until 10 mm thickness. The laminate fat was provided on the dough as a sheet of fat and the dough was folded around the fat. This composite was rolled until 6 mm thickness, folded in 5, turned over 90°; rolled out until 7 mm; folded in 4; turned over 90°, rolled out until 7 mm and folded in 4 and finally rolled out to 15 mm.
The short crust dough was rolled out to 5 mm. A layer of this short crust dough was laid on top of the puff pastry dough obtained. The composite was rolled out, using the scheme 30-25-20-15, turning over 90°, rolling out according to 12-10-8-6, turning over 90° and rolling out according 4-3-2.5-2.25.
The laminated dough obtained was cut in pieces of 12x12 cm. A portion of the minced meat was placed in the middle of the dough so that it was in contact with the short crust layer.
The product was folded in such a way that the meat was completely covered by dough.
After 15 minutes rest the products were baked at 230°C for 20 min. After baking the products were kept at 100°C for 90 min. The baked products were divided in two portions. One portion was heated immediately in a microwave oven (25 sec at 600 Watt); another portion was frozen to -20°C, kept 1 week at -20°C and re-heated in a microwave oven (50 sec, 600 Watt). The re-heated products were evaluated; the score found (on a scale of 1-10) was:

| | without freezing | after freezing |
|---|---|---|
| general performance | 8.4 | 9.2 |
| crispness | 9 | 9 |

1.6 In two comparative tests, wherein the laminating fat did not contain flour, while in one case a short crust layer was present and in the other case the short crust layer was absent, we obtained the following results:

| Without short crust | | |
|---|---|---|
| | without freezing | after freezing |
| general performance | 4.5 | 1.3 |
| crispness | 4 | 0 |

| With short crust | | |
|---|---|---|
| | without freezing | after freezing |
| general performance | 5.1 | 3.3 |
| crispness | 4 | 3 |

2. Example 1.5 was repeated, however, the short crust layer was replaced by a mixture of flour and oil (1:1).
The re-heated products were evaluated: the following score was found:

| | without freezing | after freezing |
|---|---|---|
| general performance | 8.1 | 8.8 |
| crispness | 9 | 9 |

3. Example 2 was repeated, using different ratios flour: oil. The results found are mentioned in the table below:

| | without freezing | | after 1 week freezing | |
|---|---|---|---|---|
| Flour/oil-ratio | general | crispness | general | crispness |
| 0 | 6.9 | 7 | 5.1 | 5 |
| 0.4 | 7.4 | 8 | 7.6 | 8 |
| 0.47 | 9.1 | 10 | 7.9 | 9 |
| 0.53 | 9.2 | 10 | 8.0 | 9 |

4. Example 2 was repeated, however, using different waterbinders (all in a level of 30 wt%) in the laminate fat of example 1.2. The results are:

| | without freezing | | after 1 week freezing | |
|---|---|---|---|---|
| Waterbinder | general | crispness | general | crispness |
| wheat starch | 8.2 | 8 | 5.6 | 6 |
| waxy maize starch | 7.6 | 8 | 5.1 | 6 |

5. Example 2 was repeated, however, applying different waterbinders in the barrier layer. The results found are:

| | without freezing | | after 1 week freezing | |
|---|---|---|---|---|
| Waterbinder | general | crispness | general | crispness |
| Cerestarflo® 6210 | 7.7 | 8 | 6.9 | 7.0 |
| Cerestarflo® 5311 | 7.6 | 8 | 6.9 | 7.0 |
| wheat starch | 6.4 | 6 | 7.0 | 7.0 |
| waxy maize starch | 8.6 | 9 | 7.0 | 7.0 |
| Cerestarflo® being strongly cross-linked maize (05311) and waxy maize starch (06210). | | | | |

6. Example 2 was repeated, however, using different moist fillings.

| | | without freezing | | after 1 week freezing | |
|---|---|---|---|---|---|
| Filling | Watercont. filling | general | crispness | general | crispness |
| sausage | 55 % | 9.2 | 10 | 8.0 | 9.0 |
| apple | 75 % | 9.0 | 10 | 8.5 | 9.0 |
| mexican | 75 % | 8.8 | 9.0 | 8.7 | 9.0 |
| mushroom | 65 % | 9.1 | 10 | 8.7 | 9.0 |
| vegetables | 75 % | 8.5 | 9.0 | 7.8 | 8.0 |

7. Example 2 was repeated for the preparation of a croissant, filled with a cherry-filling. The croissants are filled, after they have been molded and provided with the barrier layer. The results found are:

| | without freezing | | after 1 week freezing | |
|---|---|---|---|---|
| croissant | general | crispness | general | crispness |
| | 9.2 | 10 | 8.4 | 9 |

## Claims

1. Laminated dough system, comprising alternating layers of dough and laminated fat, wherein at least one of the laminated fat layers contains a waterbinding agent, while simultaneously at least one of the outerlayers of the system is provided with a moisture barrier layer.

2. Laminated dough system, according to claim 1, wherein the weight ratio fat:waterbinding agent in the laminated fat layers, containing a waterbinder, ranges from 20:1 to 1:3 preferably from 3:1 to 1:2.

3. Laminated dough system, according to claims 1 or 2, wherein the waterbinding agent is selected from the group consisting of: flour, starch, gelatin, gums vegetable fibres, carbohydrate, pectin.

4. Laminated dough system, according to claim 3, wherein the waterbinder is a flour with a watercontent of 1-20 wt%, preferably 4-15 wt%.

5. Laminated dough system, according to claims 1-4, wherein the dough is either unleavened or leavened.

6. Laminated dough system, according to claims 1-5, wherein the system comprises 8-729 fat layers.

7. Laminated dough system, according to claim 1, wherein the moisture barrier layer comprises at least one of the following layers: a pizza layer, a bread layer, a cookie layer, a cake pastry layer, and in particular a short crust layer, a fat layer, wherein a waterbinder is present and/or an oil layer, wherein a waterbinder is present.

8. Laminated dough system, according to claim 7, wherein the waterbinder, present in the fat and/or oil containing moisture barrier layer is selected from: flour, bran, other vegetable fibres, starch, gelatin, gums, pectin, carbohydrate.

9. Laminated dough systems, comprising a short crust layer, according to claim 7, wherein the ratio of the thickness of all the laminated layers: the thickness of the short crust layer ranges from 6:1 to 1:1.

10. Laminated filled dough systems, wherein a laminated dough system, according to claims 1-9 is provided with a moist filling material.

11. Laminated, filled dough system, according to claim 10, wherein the moist filling material is in contact with a moisture barrier layer.

12. Laminated, filled dough system, according to claims 10 and 11, wherein the moist filling material is separated from the rest of the laminated dough system by an edible barrier layer, in particular being collagen.

13. Baked, preferably filled laminated products, wherein the laminated dough systems of claims 1-12 are baked and optionally frozen.

14. Baked filled optionally frozen laminated products, according to claim 13, wherein the products comprise: apple-turnovers, sausage rolls, puff-pastry-snacks.

15. Process for the preparation of microwaveable, baked filled laminated products according to claims 13-14, comprising the steps of:
(1) preparation of a dough by mixing and kneading of at least flour, water and fat
(2) preparation of a fat system, containing a waterbinder by mixing fat and waterbinder
(3) laminating the dough of (1) with the fat system of (2) providing a laminated dough system with 8-729 fat layers
(4) preparation of a moisture barrier layer in the form of a short crust layer, or in the form of a mixture of fat and/or oil and waterbinder
(5) providing at least one outerlayer of the product, obtained after (3) with the moisture barrier layer obtained after (4)
(6) providing a moist filling material in contact with the moisture barrier layer of the product, obtained after (5)
(7) baking of the product of (6) and optionally
(8) freezing of the product of (7)

16. Process, according to claim 15, wherein the product of step (7) is subjected to a drying at a temperature above 80°C during 5 mins to 2 hrs prior to its freezing.

## Patentansprüche

1. Laminiertes Teigsystem, umfassend alternierende Schichten von Teig und Laminierfett, in welchem mindestens eine der laminierten Fettschichten ein Wasserbindemittel enthält, während gleichzeitig mindestens eine der Außenschichten des Systems mit einer Feuchtigkeitssperrschicht versehen ist.

2. Laminiertes Teigsystem nach Anspruch 1, in welchem das Gewichtsverhältnis von Fett zu Wasserbindemittel in den ein Wasserbindemittel enthaltenden, laminierten Fettschichten von 20:1 bis 1:3, vorzugsweise von 3:1 bis 1:2, reicht.

3. Laminiertes Teigsystem nach den Ansprüchen 1 oder 2, in welchem das Wasserbindemittel aus der aus Mehl, Stärke, Gelatine, Gummis, pflanzlichen Fasern, Kohlenhydraten und Pektin bestehenden Gruppe ausgewählt ist.

4. Laminiertes Teigsystem nach Anspruch 3, in welchem das Wasserbindemittel ein Mehl mit einem Wassergehalt von 1 bis 20 Gew.-%, vorzugsweise 4 bis 15 Gew.-%, ist.

5. Laminiertes Teigsystem nach den Ansprüchen 1 bis 4, in welchem der Teig entweder mit einem Treibmittel versehen ist oder nicht.

6. Laminiertes Teigsystem nach den Ansprüche 1 bis 5, in welchem das System 8 bis 729 Fettschichten umfaßt.

7. Laminiertes Teigsystem nach Anspruch 1, in welchem die Feuchtigkeitssperrschicht mindestens eine der folgenden Schichten umfaßt: eine Pizzaschicht, eine Brotschicht, eine Plätzchenschicht, eine Kuchengebäckschicht und insbesondere eine Mürbegebäckschicht, eine Fettschicht, worin ein Wasserbindemittel vorliegt, und/oder eine Ölschicht, worin ein Wasserbindemittel vorliegt.

8. Laminiertes Teigsystem nach Anspruch 7, in welchem das in der fett- und/oder ölhaltigen Feuchtigkeitssperrschicht vorliegende Wasserbindemittel ausgewählt ist aus Mehl, Kleie, anderen pflanzlichen Fasern, Stärke, Gelatine, Gummis, Pektin und Kohlenhydraten.

9. Laminierte, eine Mürbeteigschicht umfassende Teigsysteme nach Anspruch 7, in welchem das Verhältnis der Dicke aller laminierten Schichten zur Dicke der Mürbeteigschicht von 6:1 bis 1:1 reicht.

10. Laminierte, gefüllte Teigsysteme, in welchen ein laminiertes Teigsystem gemäß den Ansprüchen 1 bis 9 mit einem feuchten Füllmaterial versehen ist.

11. Laminiertes, gefülltes Teigsystem nach Anspruch 10, in welchem das feuchte Füllmaterial mit einer Feuchtigkeitssperrschicht in Kontakt steht.

12. Laminiertes, gefülltes Teigsystem nach den Ansprüchen 10 und 11, in welchem das feuchte Füllmaterial vom Rest des laminierten Teigsystems durch eine eßbare Sperrschicht, die insbesondere Kollagen ist, getrennt ist.

13. Gebackene, vorzugsweise gefüllte, laminierte, Produkte, in welchen die laminierten Teigsysteme nach den Ansprüchen 1 bis 12 gebacken und fakultativ eingefroren sind.

14. Gebackene, gefüllte, fakultativ gefrorene, laminierte Produkte gemäß Anspruch 13, wobei die Produkte Apfeltaschen, Würstchen-im-Schlafrock und Blätterteigsnacks umfassen.

15. Verfahren zur Herstellung mikrowellenbehandelbarer, gebackener, gefüllter, laminierter Produkte gemäß den Ansprüchen 13 und 14, das die Schritte umfaßt:
(1) Herstellung eines Teiges durch Mischen und Kneten von mindestens Mehl, Wasser und Fett,
(2) Herstellung eines ein Wasserbindemittel enthaltenden Fettsystems durch Mischen von Fett und Wasserbindemittel,
(3) Laminieren des Teiges aus (1) mit dem Fettsystem von (2), was ein laminiertes Teigsystem mit 8 bis 729 Fettschichten ergibt,
(4) Herstellung einer Feuchtigkeitssperrschicht in Form einer Mürbeteigschicht oder in Form einer Mischung von Fett und/oder Öl und Wasserbindemittel,
(5) Versehen mindestens einer Außenschicht des nach (3) erhaltenen Produktes mit der nach (4) erhaltenen Feuchtigkeitssperrschicht,
(6) Inkontaktbringen eines feuchten Füllmaterials mit der Feuchtigkeitssperrschicht des nach (5) erhaltenen Produktes,
(7) Backen des Produktes von (6) und fakultativ
(8) Einfrieren des Produktes von (7).

16. Verfahren nach Anspruch 15, bei welchem das Produkt aus Schritt (7) einer Trocknung bei einer Temperatur von mehr als 80°C für 5 Minuten bis 2 Stunden vor seinem Einfrieren unterworfen wird.

## Revendications

1. Système de pâte feuilletée, comprenant des couches en alternance de pâte et de matière grasse appliquée en couches multipies, dans lequel au moins une des couches de matière grasse appliquée en couches multiples contient un agent d'absorption de l'eau, alors que simultanément au moins inne des couches extérieures du système comporte une couche faisant barrière à l'humidité.

2. Système de pâte feuilletée selon la revendication 1, dans lequel le rapport de masse entre matière grasse et agent d'absorption de l'eau dans les couches de matière grasse appliquée en couches multiples contenant un agent d'absorption de l'eau est compris entre 20:1 et 1:3, de préférence entre 3:1 et 1:2.

3. Système de pâte feuilletée selon la revendication 1 ou 2, dans lequel l'agent d'absorption de l'eau est sélectionné parmi le groupe composé de : farine, amidon, gélatine, gommes, fibres végétales, glucides, pectine.

4. Système de pâte feuilletée selon la revendication 3, dans lequel l'agent d'absorption de l'eau est une farine présentant une teneur en eau comprise entre 1 et 20 % en masse, de préférence entre 4 et 15 % en masse.

5. Système de pâte feuilletée selon les revendications 1 à 4, dans lequel on fait lever la pâte, ou non.

6. Système de pâte feuilletée selon es revendications 1 à 5, dans lequel le système comporte 8 à 729 couches de matière grasse.

7. Système de pâte feuilletée selon la revendication 1, dans lequel la couche faisant barrière a l'humidité comprend au moins l'une des couches suivantes : une couche de pizza, inne couche de pain, une couche de biscuit, une couche de pâte à gâteau et, en particulier, inne couche de sablé, inne couche de matière grasse, dans laquelle un agent d'absorption de l'eau est présent et/ou une couche d'huile, dans laquelle un agent d'absorption de l'eau est présent.

8. Système de pâte feuilletée selon la revendication 7, dans lequel l'agent d'absorption de l'eau, présent dans la couche faisant barrière à l'humidité contenant de l'huile et/ou de la matière grasse, est sélectionné parmi le groupe composé de : farine, son, autres fibres végétales, amidon, gélatine, pectine, gommes, glucides.

9. Systèmes de pâte feuilletée, comprenant une couche de sablé selon la revendication 7, dans lesquels le rapport entre l'épaisseur de toutes les couches feuilletées et l'épaisseur de la couche de sablé est compris entre 6:1 et 1:1.

10. Systèmes de pâte feuilletée fourrée, dans lesquels un système de pâte feuilletée selon les revendications 1 à 9, comporte une matière de garniture humide.

11. Système de pâte feuilletée fourrée selon la revendication 10, dans lequel la matière de garniture humide est en contact avec une couche faisant barrière a l'humidité.

12. Système de pâte feuilletée fourrée selon les revendications 10 et 11, dans lequel la matière de garniture humide est séparée du reste du système de pâte feuilletée par une couche barrière comestible, celle-ci se composant en particulier de collagène.

13. Produits feuilletés cuits, de préférence fourrés, dans lesquels les systèmes de pâte feuilletée selon les revendications 1 à 12 sont cuits et éventuellement congelés.

14. Produits feuilletés, cuits et fourrés, éventuellement congelés selon la revendication 13, dans lesquels les produits comprennent des chaussons aux pommes, des friands à la saucisse, des en-cas feuilletés.

15. Procédé de préparation de produits feuilletés, fourrés et cuits, pouvant être passés au micro-ondes selon es revendications 13 et 14, comportant les étapes suivantes consistant:
(1) à préparer une pâte en mélangeant et en malaxant au moins de la farine, de l'eau et de la matière grasse,
(2) à préparer un système de matière grasse, contenant un agent d'absorption de l'eau en mélangeant une matière grasse et un agent d'absorption de l'eau,
(3) à feuilleter la pâte de (1) avec le système de matière grasse de (2), en fournissant un système de pâte feuilletée présentant 8 à 729 couches de matière grasse,
(4) à préparer une couche faisant barrière à l'humidité sous forme d'une couche de sablé, ou sous forme d'un mélange composé de matière grasse et/ou d'huile et d'un agent d'absorption de l'eau,
(5) à fournir au moins une couche extérieure du produit, obtenu après (3) avec la couche faisant barrière à l'humidité obtenue après (4),
(6) à fournir une matière de garniture humide en contact avec la couche faisant barrière à l'humidité du produit, obtenu après (5),
(7) à cuire le produit de (6) et éventuellement
(8) à congeler le produit de (7).

16. Procédé selon la revendication 15, dans lequel le produit de l'étape (7) est soumis à un séchage à une température supérieure à 80 ° C pendant une durée allant de 5 minutes à 2 heures jusqu'à sa congélation.
